**Europäisches Patentamt**

(19) **European Patent Office**

**Office européen des brevets**

(11) Veröffentlichungsnummer: **0 056 426**
**B1**

(12) **EUROPÄISCHE PATENTSCHRIFT**

(45) Veröffentlichungstag der Patentschrift:
**18.12.85**

(51) Int. Cl.⁴: **G 01 N 21/64,** G 01 N 21/65

(21) Anmeldenummer: **81107128.1**

(22) Anmeldetag: **10.09.81**

(54) **Vorrichtung zur Darstellung von Probenparametern.**

(30) Priorität: **08.10.80 DE 3037983**

(43) Veröffentlichungstag der Anmeldung:
**28.07.82 Patentblatt 82/30**

(45) Bekanntmachung des Hinweises auf die Patenterteilung:
**18.12.85 Patentblatt 85/51**

(84) Benannte Vertragsstaaten:
**FR GB NL SE**

(56) Entgegenhaltungen:
**WO - A - 80/01005**
**FR - A - 2 422 946**
**US - A - 3 918 812**
**US - A - 4 087 685**
**US - A - 4 115 802**
**US - A - 4 162 405**
**US - A - 4 195 930**

**JOURNAL OF RAMAN SPECTROSCOPY, Band 3, 1975, DORDRECHT (NL) M. DELHAYE et al.: "Raman microprobe and microscope with laser excitation", Seiten 33-43**
**APPLIED PHYSICS, Band 22, Nr. 2, Juni 1980 HEIDELBERG (DE) T. WILSON: "Imaging properties and applications of scanning optical microscopes", Seiten 119-128**

(73) Patentinhaber: **Firma Carl Zeiss, D-7920 Heidenheim (Brenz) (DE)**

(72) Erfinder: **Schmidt, Werner, Prof.Dr., Winkenhaldeweg 1, D-7080 Aalen (DE)**
Erfinder: **Weber, Klaus, Dr., Baumgartenweg 22, D-7923 Königsbronn (DE)**
Erfinder: **Müller, Gerhard, Prof.Dr., Bischof-Fischer-Strasse 106-108, D-7080 Aalen (DE)**
Erfinder: **Wilke, Volker, Dr., Krähenfeldstrasse 40, D-7080 Aalen 15 (DE)**

(56) Entgegenhaltungen: (Fortsetzung)
**REVIEW OF SCIENTIFIC INSTRUMENTS, Band 44, Nr. 11, November 1973 NEW YORK (US) W.J. BAXTER et al.:"A Photoemission Electron Microscope using an electron multiplier array", Seiten 1628, 1629**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Darstellung ausgewählter Eigenschaften einer Probe mit den im Oberbegriff des Anspruchs 1 genannten Merkmalen.

Für eine aussagekräftige Probenanalyse kommen zur Zeit verschiedene, auf bestimmte Anwendungsbereiche optimierte Analyseverfahren zum Einsatz (Chromatographie, Massenspektrometrie), die keine zerstörungsfreie Messung erlauben.

Mit den bisher bekannten spektralphotometrischen Analyseverfahren lässt sich die zu untersuchende Probe nicht immer eindeutig identifizieren, da die schwach strukturierten Absorptionsspektren keinen besonders hohen Informationsgehalt besitzen. Schwierigkeiten ergeben sich insbesondere dann, wenn die Probe mehrere Substanzen enthält, deren Spektren überlappen. Mit den bekannten optischen Analyseverfahren erhält man meist nur integrale Informationen über die zu untersuchenden Proben; über die räumliche Verteilung ihrer Parameter lassen sich keine Aussagen treffen.

In dem Firmenprospekt «Mikroprobe Mole» der Firma Jobin Yvon und in GIT-Fachzeitschrift Laboratorium I 1978, Seite 38 sind ein Verfahren und eine Vorrichtung zur mikroanalytischen Untersuchung von Proben beschrieben, mit deren Hilfe diese mit Laserlicht kontinuierlich bestrahlt und im Lichte ihrer emittierten Ramanstrahlung beobachtet werden. Es ist möglich, nur Licht charakteristischer Ramanlinien von bestimmten, in der zu untersuchenden Probe enthaltenen Substanzen zu verwenden, deren räumliche Verteilung bestimmt werden soll. Entsprechend der Einstellung des beobachtungsseitig verwendeten Monochromators werden damit substanzspezifische Bilder der Probe erzeugt, die auch hinsichtlich der molekularen Struktur der Komponenten aussagekräftig sind.

Die Empfindlichkeit dieses Verfahrens ist allerdings begrenzt, da ein Laser fester Wellenlänge zur Beleuchtung des gesamten Probenbereichs verwendet wird und somit eine hohe Streulichtunterdrückung nötig ist. Fluoreszierende Probenbereiche setzen die Empfindlichkeit der Vorrichtung zusätzlich herab.

Da ausserdem das gesamte Bild der Probenoberfläche durch den Monochromator übertragen wird, wird durch diesen die erreichbare Auflösung beschränkt.

Bei längerer Bestrahlung insbesondere empfindlicher Proben mit kurzwelligem Licht sind Objektschädigungen nicht auszuschliessen. In der Anwendung ist dieses Verfahren auf Proben beschränkt, die ein ausreichend intensives charakteristisches Raman-Spektrum liefern. Das ist jedoch nur bei den Molekülen der Fall, bei denen Molekülschwingungen eine signifikante Änderung der Polarisierbarkeit bewirken.

Im Journal of Raman Spectroscopy Nr. 3 (1975) Seite 33 bis 43 ist eine Vorrichtung zur Raman-Mikroskopie erwähnt, die mit eindimensionaler Abtastung einer senkrecht zur Abtastrichtung bewegten Probe durch einen Laserstrahl arbeitet und die im Takte der Abtastfrequenz ausgelesenen Signale eines Photomultipliers zur elektronischen Bilderzeugung verwendet. Durch das rasterförmige Abtasten der Probe erhält man im Licht der charakteristischen Raman-Strahlung Bilder der Probe, die eine hohe Tiefenschärfe besitzen, und gewinnt den Vorteil höherer Empfindlichkeit gegenüber Verfahren, bei denen die gesamte zu untersuchende Fläche ausgeleuchtet wird. Strahlenschäden des Materials, die zum Beispiel bei biologischen Proben auftreten können, werden bei rasterförmiger Abtastung minimiert. Die vorstehend genannten, durch Fluoreszenzlicht hervorgerufenen Empfindlichkeitsprobleme treten jedoch auch bei dieser bekannten Anordnung auf, da jeweils eine ganze Abtastzeile auf den Photomultiplier fokussiert wird.

Aus der US-A-4 162 405 ist eine Vorrichtung zur Darstellung der Stoffwechseltätigkeit von Körpergewebe in Abhängigkeit vom Ort im Gewebe bekannt, die als Fluorometer ausgebildet ist. Diese Vorrichtung besitzt eine Laserlichtquelle, einen Strahlablenker zur rasterförmigen Abtastung mikroskopischer Probenbereiche und mehrere ortsfeste, auf unterschiedliche Spektralbereiche des Fluoreszenzlichtes ansprechende Empfänger sowie einen Monitor zur bildlichen Darstellung der Ausgangssignale der Strahlungsempfänger.

Bei dieser Vorrichtung wird der Abtaststrahl von einem Kondensor auf die zu untersuchende Probe fokussiert, und es ist ein separates Objektiv vorgesehen, über das das gesamte Bild der Probenoberfläche auf die Empfänger abgebildet wird. Abgesehen von den bereits genannten, bei derartigen Abbildungsverhältnissen auftretenden Problemen in Bezug auf die Nachweisempfindlichkeit ist bei der bekannten Vorrichtung das Auflösungsvermögen beeinträchtigt, da die Apertur des Kondensors, über den der Abtastlichtstrahl geführt wird, nicht voll ausgenutzt wird.

Es ist die Aufgabe der vorliegenden Erfindung, eine Vorrichtung zu schaffen, die eine Identifizierung probenspezifischer Parameter mit hoher Empfindlichkeit und deren Darstellung in Abhängigkeit vom Ort in der Probe mit hoher Auflösung erlaubt, und die möglichst einfach aufgebaut ist.

Diese Aufgabe wird erfindungsgemäss durch die im Anspruch 1 definierte Vorrichtung gelöst.

Die Vorrichtung erlaubt eine zerstörungsfreie Analyse, im Gegensatz zu massenspektroskopischen Methoden und Mikroplasma-Sonden, und ist auf eine Vielzahl von Stoffen anwendbar, da unterschiedliche und auf den Anwendungsfall bezogene spektroskopische Nachweismethoden benutzt werden können.

So kann die von der Probe emittierte Strahlung z.B. Fluoreszenz, Phosphoreszenz, Raman-Strahlung enthalten, die zur Bilddarstellung verwendet werden. Lage und Breite des gewünschten spektralen Bereichs können durch Wahl geeigneter Filter und Detektoren dem Anwendungsfall entsprechend beeinflusst werden.

Die Arbeitsweise der Vorrichtung ist keineswegs auf die Beleuchtung mit Licht im sichtbaren Spektralbereich beschränkt, sondern es ist leicht einzusehen, dass auch Strahlung anderer Wellenlänge (IR, UV) verwendet werden kann, wenn die Problemstellung es erfordert. Gleiches gilt für die emittierte Strahlung. Unter «Strahlung ausserhalb des Spektrums des Abtastlichtstrahls» ist nicht nur elektromagnetische Strahlung zu verstehen; vielmehr ist im weiteren Sinne jede Form von detektierbaren Probenparametern gemeint. Dies kann auch Korpuskularstrahlung sein, die z.B. aus den von der Probe emittierten Photoelektronen besteht. Eine Vorrichtung, die die lichtinduzierte Emission von Photoelektronen zur Bilderzeugung verwendet, kann überall dort eingesetzt werden, wo die höhere Auflösung des Rasterelektronenmikroskops nicht benötigt wird, und ermöglicht Bilder hoher Tiefenschärfe im «Licht» der für den molekularen Aufbau der Probe verantwortlichen Elektronen aus den äussersten besetzten Niveaus. Eine Objektschädigung durch einen energiereichen Elektronenstrahl tritt dabei nicht auf.

Mit zwei Detektoren z.B. für das gestreute- und das Raman-Licht bei einer charakteristischen Wellenlänge lässt sich eine an der sichtbaren Struktur orientierte Verteilung der zu analysierenden Substanz ermitteln. Die Verteilung eines durch z.B. Raman-Strahlung identifizierten Stoffes ohne gleichzeitigen Bezug auf die sichtbare Struktur ist meist völlig wertlos (Lageerkennung von Einschlüssen in Zellen). Mit zwei Detektoren lässt sich auch eine schwache, für die untersuchte Probe charakteristische Strahlung gegen störenden Untergrund diskriminieren. Weiterhin lassen sich koinzidente oder antikoinzidente Darstellung verschiedener Komponenten der Substanz mit hoher Nachweisempfindlichkeit realisieren.

Da die nachzuweisende Strahlung und das Beleuchtungslicht über die gleiche Abtasteinrichtung geführt werden, wird stets nur der gerade beleuchtete Probenpunkt auf einen feststehenden Empfänger abgebildet, so dass Strahlung aus bereits abgerasterten Probenbereichen (nochleuchtende Fluoreszenz), die eine störende Erhöhung des Signaluntergrundes bewirkt, vom Detektor ferngehalten wird. Der Aufwand ist zudem vergleichsweise gering, da einige Elemente (Abtasteinheit, Objektiv) mehrfach genutzt werden. So findet mit einem hochaperturigen, gut korrigierten Objektiv eine nur durch Beugung begrenzte Fokussierung des Beleuchtungsstrahles in der Objektebene statt, wodurch die Auflösung der erzeugten Bilder optimiert ist. Zum anderen wird ein Höchstmass an Lichtstärke beim Nachweis der Probenstrahlung erreicht.

Letzteres ist dann besonders von Vorteil, wenn im Beleuchtungsspektrum nicht enthaltene Strahlung (Fluoreszenz, Raman-Strahlung) nachgewiesen werden soll, die mehrere Grössenordnungen unter der Intensität des Anregungslichtes liegt.

Besondere Vorteile ergeben sich, wenn mindestens zwei Signalfolgen durch Detektion der transmittierten, der gestreuten, der Fluoreszenz oder der Raman-Strahlung im wesentlichen gleichzeitig erzeugt und zur Bilderzeugung verwendet werden, wie die folgenden Beispiele zeigen:

a) Streustrahlung – Transmission

Man erhält durch Messung beider Komponenten der Strahlung und bei geeigneter Darstellung ein Bild, das die Verteilung der Absorption in der Probe wiedergibt, d.h. ein Durchlicht-Hellfeldbild, das nur auf Absorption beruht und keine streuenden Strukturen wiedergibt. Die gleiche Information ergibt auch ein Verfahren, bei dem ein niederfrequent modulierter Lichtstrahl über eine Probe geführt wird und die bei Absorption des Lichts in der Probe entstehenden Wärmewellen durch einen Infrarotsensor nachgewiesen und (photothermischer Effekt) zur Bilderzeugung verwendet werden. Auch mit diesem Verfahren kann die räumliche Verteilung der Absorptionseigenschaften einer Probe gemessen werden. Das Verfahren ist besonders für die Untersuchung opaker Proben geeignet und ermöglicht dort durch Variation der Modulationsfrequenz des Lichtes eine steuerbare Tiefenauflösung. Zur Zeit ist es bekannt, den photothermischen Effekt zur Aufnahme von Absorptionsspektren zu verwenden, die Bilderzeugung mit Hilfe des Effektes ist bisher nicht bekannt.

Ebenso wie beim Nachweis der von der Probe ausgehenden Photoelektronen zur Bilderzeugung muss in einer nach diesem letztgenannten Verfahren arbeitenden Vorrichtung jedoch der betreffende Detektor ausserhalb der Beleuchtungsoptik angeordnet sein, da diese im allgemeinen für die genannte Strahlung undurchlässig ist. Die Beleuchtungsoptik wird in solchen Fällen zur Erzeugung eines Auflicht-Hellfeldbildes mitbenutzt.

b) Streustrahlung – Fluoreszenz

Man erhält ein Dunkelfeldbild und gleichzeitig eine Darstellung fluoreszierender Probenbereiche und ist in der Lage, durch entsprechende Wahl des Spektralbereiches selektiv die relative Lage der verschiedenen fluoreszierenden, z.B. Verunreinigungen in der Probe zu erkennen.

c) Transmission – Fluoreszenz

Im Vergleich zu b) kann hier das Fluoreszenzbild mit einem Hellfeldbild verglichen werden.

d) Streustrahlung – Raman-Strahlung

In ihrer Lage relativ zu den sichtbaren Strukturen im Dunkelfeldbild lassen sich Einschlüsse, Oberflächendefekte, absorbierte Substanzen, die ihrem molekularen Aufbau nach durch die emittierte Raman-Strahlung eindeutig identifiziert werden können, beobachten.

e) Transmission – Raman-Strahlung

Es ist möglich, den Stoffwechsel in lebenden Organismen zu beobachten, ohne dass eine Objektschädigung durch zu hohe Strahlungsdauer und Intensität eintritt. Die verschiedenen Stoffwechselprodukte ergeben unterschiedliche Raman-Spektren, so dass ihre spezifische Verteilung im Organismus durch Beobachtung im charakteristischen Raman-Licht ermittelt werden kann. Wegen der strengen Konzentrationsabhängigkeit der Intensität der Raman-Linien von den dazu beitragenden Substanzen ist auch eine quantitative Auswertung mehrerer überlagerter Spektren möglich.

f) Fluoreszenz – Raman-Strahlung

Gleichzeitige Messung der Raman-Intensität und der des Fluoreszenz-Lichtes ermöglicht eine vom fluoreszierenden Untergrund unverfälschte Darstellung der Probe im Raman-Licht (Subtraktion). Die Diskriminierung der Raman-Strahlung gegenüber der Fluoreszenz kann durch Ausnützen der Fluoreszenzabklingzeit oder bei Kenntnis der Spektren durch geeignete Wahl des Spektralbereiches, in dem die beiden Strahlungskomponenten nachgewiesen werden, geschehen.

g) Raman-Strahlung – Raman-Strahlung

Damit wird die gleichzeitige Identifizierung mehrerer verschiedener Komponenten einer Probe und bei geeigneter Überlagerung der Bilder die Darstellung in relativer Konzentration möglich. Natürlich können statt zweier auf verschiedene Raman-Linien abgestimmter Detektoren auch zwei monochromatische Lichtquellen verschiedener Wellenlänge benützt werden, mit denen die Probe alternierend beleuchtet wird.

Speziell bei der Untersuchung von opaken Festkörpern auf z.B. Einschlüsse oder Inhomogenitäten unterhalb der Probenoberfläche kann es sich als vorteilhaft erweisen, die Probe zusätzlich mit Ultraschall zu durchstrahlen. Die auf der Oberfläche mit der Ultraschallfrequenz modulierte Streustrahlung liefert ein Bild der inneren Probenstruktur und kann mit den oberflächenspezifischen Bildern im Raman- oder Fluoreszenzlicht verglichen werden. Dabei werden Relationen zwischen innerer und äusserer Probenstruktur sichtbar.

Weiterhin ist die zeitliche Veränderung der Probenoberfläche im Raman- oder Fluoreszenzlicht während der Ultraschallbestrahlung zu beobachten. Damit können also Ultraschallreinigungsprozesse überwacht werden. Bei gleichzeitiger Beobachtung des Streulichts, aus der die Verteilung der Ultraschallamplituden an der Probenoberfläche ermittelt werden kann, und des Raman-Lichtes, aus dem sich die räumliche Verteilung der Konzentration der Verunreinigungen ergibt, ist auch eine materialspezifische Optimierung von Ultraschallfrequenzdauer und -Amplitude möglich.

Die Darstellung der von den Detektoren erhaltenen Signale in Bildern der Oberfläche der Probe kann auf verschiedene Weise erfolgen. Wenn eine Korrelation zwischen den in verschiedenen Spektralbereichen dargestellten Strukturen besteht, ist es vorteilhaft, diese in einem Bild überlagert darzustellen. Hier kann eine zeitlich alternierende Darstellung gewählt werden, bei der sich dem Betrachter nicht in beiden Bildern vorkommende Details durch Blinken darbieten.

Für z.B. die Untergrundeliminierung, ist es vorteilhaft, die Differenz der Signale zweier Detektoren, von denen einer bei der für die Substanz charakteristischen Wellenlänge und der zweite bei etwas abweichender Wellenlänge empfindlich ist, zur Darstellung in einem Bild zu verwenden. Wird die nicht korrelierte Verteilung unterschiedlicher und durch Strahlung in verschiedenen Spektralbereichen identifizierter Substanzen dargestellt, dann erweist sich eine Einzeldarstellung der Bilder als vorteilhaft.

Zur Kontrasterhöhung und zur Erzeugung der vorstehend genannten überlagerten Bilder werden Amplituden und/oder Phase der Ausgangssignale der verschiedenen Detektoren elektronisch beeinflusst. Beispielsweise kann durch Signaldifferentiation eine bessere Erkennung von Objektumrissen erreicht werden, und durch logische Verknüpfung (Division, Substraktion) der Signale zweier Detektoren eine Kontrasterhöhung erreicht werden. Diese Massnahmen können mit geringem Aufwand an der Elektronik durchgeführt werden und erübrigen somit die konventionellen optischen Kontrastierungsmethoden (Phasenkontrast etc.).

Eine weitere vorteilhafte Kontrastierungsmöglichkeit ergibt sich bei Bildern, die mit Hilfe des an der Probe elastisch gestreuten Lichtes erzeugt werden, wenn die Beleuchtung kohärent erfolgt. Durch Überlagerung des Streulichts mit Licht aus dem Beobachtungsstrahlengang können am Detektor kontrasterhöhende Interferenzen erzeugt werden.

Verwendet man einen Monomode-Laser zur Beleuchtung der Probe, so lässt sich das Auflösungsvermögen insbesondere für die Bilderzeugung im Rayleigh-Streulicht, der ein kohärenter Streuprozess ist, auf folgende Weise im Vergleich zu konventioneller mikroskopischer Abbildung verbessern: Die durch den Abtastvorgang nacheinander beleuchteten Objektpunkte liefern eine Verteilung der Signalintensität längs einer Abtastlinie, die der Faltung der Objektfunktion mit der Intensitätsfunktion des Lichtpunktes im Fokus des verwendeten Objektivs entspricht. Letztere Funktion lässt sich z.B. durch eine Gaussfunktion sehr gut annähern.

Es ist nun zweckmässig und mit den bekannten Methoden der Datenverarbeitung möglich, die gemessene Intensitätsverteilung des Streulichts längs einer Abtastlinie zu entfalten, um durch die damit erreichte direkte Wiedergabe der Objektfunktion zu einer nicht mehr beugungsbegrenzten Überauflösung der Probe zu kommen. Die erreichbare Auflösung hängt dann nur noch von der erreichbaren Messgenauigkeit der Einzelintensitäten des Punktgitters ab, mit dem die Probe abgetastet wird.

Längs einer Abtastlinie lässt sich die Entfaltung mit vertretbarem elektronischem Aufwand in Echtzeit durchführen, während zur Entfaltung der zweidimensionalen Intensitätsfunktion die Probe mit sehr geringem Versatz abgerastet werden und die gemessene Intensitätsverteilung längs jeweils einer Abtastlinie gespeichert werden muss. Hier erfolgt die Entfaltung durch einen nachgeschalteten Rechenprozess.

Bei der Analyse komplizierter Verbindungen erweist es sich als nützlich, zusätzlich zu dem genannten Verfahren die rasterförmige Ablenkung des Lichtbündels bei vorgewählten Bildpunkten zu stoppen und den oder die vorgegebenen Spektralbereiche kontinuierlich zu verändern, um ein Spektrum- bzw. Kombinationsspektren aus vorgewählten Bildbereichen zu schreiben, anhand derer z.B. auffällige Strukturen ihrer molekularen Zusammensetzung nach exakt identifiziert werden können. Auf diese Weise ist auch eine objektive Optimierung des Parameters «Wellenlänge» möglich, um kontrastreiche Bilder der Verteilungen der identifizierten Substanzen zu erhalten.

Selbstverständlich kann bei einigen Anwendungen (z.B. beim Nachweis der Raman-Strahlung) auch statt einer Veränderung der spektralen Empfindlichkeit des Detektors die Wellenlänge des Beleuchtungslichtes verändert werden; eine äquivalente Massnahme, bei der man abgesehen von Sonderfällen (Resonanz-Raman-Streuung) die gleichen Spektren wie mit einem durchstimmbaren Monochromator vor dem Detektor erhält.

Gerade bei der Beobachtung von Raman-Licht verschiedener Wellenlängen kann es zweckmässig sein, statt zwei Detektoren, die z.B. durch entsprechende Filter auf den gewünschten Wellenlängenbereich abgestimmt sind, zwei monochromatische Lichtquellen einzusetzen und den Prüfling gleichzeitig oder alternierend mit Licht mehrerer Wellenlängen zu bestrahlen. Während man im ersten Fall eine Überlagerung der Intensitäten der betreffenden Linien aus zwei Raman-Spektren erhält, kann im zweiten Fall (alternierend) durch Differenzbildung zweier zeitlich aufeinanderfolgender Signale eine Eliminierung von Untergrundstrahlung oder eine Darstellung der relativen Konzentration zweier Probensubstanzen erfolgen.

Die erfindungsgemässe Vorrichtung wird vorteilhaft bei der Qualitätskontrolle von hochreinen Werkstoffen in der biomedizinischen Technik, der pharmazeutischen Produktion und der technischen Chemie eingesetzt, ihr Anwendungsgebiet ist stets dort, wo eine empfindliche Methode zur zerstörungsfreien Prüfung bzw. Analyse der molekularen Struktur der Proben gefordert wird. Hier seien für den ersten Bereich (biomedizinische Technik) die Kontrolle der Oberflächenbeschaffenheit von Implantaten genannt, von der die Korrosionsbeständigkeit der Implantate und ihre Verträglichkeit mit dem Organismus abhängen.

Im zweiten Bereich ist die Routinekontrolle hochreiner Arzneimittel zu nennen, deren therapeutische Wirkung stark von auch nur geringen Änderungen ihrer Zusammensetzung abhängen kann. Die molekulare Struktur oder die Konzentrationsverhältnisse der untersuchten Medikamente können mit Hilfe von Detektoren, die auf die charakteristischen Raman-Linien der Komponenten abgestimmt sind, eindeutig erkannt und somit laufend kontrolliert werden.

Die Vorrichtung gemäss der Erfindung erlaubt den selektiven Nachweis nur der Strahlung, die von dem beleuchteten Probenpunkt ausgeht. Wegen der konstanten Abbildungsverhältnisse zwischen dem beleuchteten Probenpunkt und dem Detektor bzw. der Blende, auf die der beleuchtete Punkt während des Abtastens dauernd fokussiert wird, kann dort ohne Schwierigkeiten ein durchstimmbarer Monochromator angeordnet werden, mit dem der Spektralbereich, in dem das Verfahren durchgeführt wird, einstellbar ist. Anstelle des durchstimmbaren Monochromators kann auch ein Monochromator eingesetzt werden, der die Strahlung spektral zerlegt und gleichzeitig auf mehrere, den einzelnen spektralen Bereichen zugeordnete Empfänger richtet.

Wenn die Natur der verschiedenen Strahlungen so unterschiedlich ist, (Licht, Elektronenstrahl, langwellige Infrarotstrahlung, Schall) dass eine Übertragung durch die Beleuchtungsoptik nicht möglich ist, ist es vorteilhaft, den auf Strahlung ausserhalb des zur Beleuchtung verwendeten Spektralbereichs sensibilisierten Empfänger ausserhalb des die Ablenkeinheit enthaltenden optischen Systems vor bzw. hinter der Probe anzuordnen.

Wird eine Blende senkrecht zur optischen Achse des abbildenden Systems vor dem Detektor entgegen der Abtastrichtung so verschoben angeordnet, dass stets auf einen zeitlich vor dem gerade beleuchteten Punkt liegenden Nachbarpunkt fokussiert ist, dann kann gezielt die von diesem Punkt ausgehende, verzögert emittierte Strahlung gemessen werden, wobei die Verzögerungszeit von der Abtastgeschwindigkeit und der Verschiebung der Blende abhängt.

Wählt man statt der Blende ein lineares Diodenarray, das eventuell mit vorgeschalteten Filtern auf einen bestimmten Wellenlängenbereich sensibilisiert ist, und ordnet dieses in Abtastrichtung wie oben beschrieben an, dann erhält man je nach Grösse des Arrays eine mehr oder weniger gut aufgelöste Darstellung der abklingenden Lumineszenz aller Bildpunkte. Durch geeignete Ausweilteschaltungen kann das Abklingverhalten entweder des ganzen Bildbereichs integral oder nur für ausgewählte Bildpunkte dargestellt werden. Es ist somit möglich, anhand der unterschiedlichen Abklingzeiten der Lumineszenz unterschiedliche Komponenten einer Probe zu erkennen und bei der bildmässigen Darstellung gegeneinander zu diskriminieren. Auch eine Unterscheidung zwischen Raman-Strahlung, die praktisch ohne Verzögerung emittiert wird, und Fluoreszenz oder Phosphoreszenz ist auf diese Weise möglich.

Als Lichtquelle wählt man zweckmässig einen Laser, insbesondere wenn auf den Nachweis von Raman-Strahlung Wert gelegt wird, für den man eine monochromatische Lichtquelle benötigt. Der Laser kann z.B. kontinuierlich Licht emittieren und für spektralphotometrische Zwecke oder, um Raman-Spektren zu erhalten, durchstimmbar sein. Wenn höhere Leistungsdichten der Beleuchtungsstrahlung gewünscht werden, wie es z.B. für die Fluoreszenzanregung erforderlich sein kann, oder um die abzurasternden Bildbereiche in scharf abgegrenzte Punkte zu zerlegen, setzt man zweckmässig einen gepulsten Laser ein, wobei die Pulsfolge mit der Ablenkeinheit und der Anordnung zur elektronischen Bilderzeugung synchronisiert ist. Durch Unterdrückung des Detektorsignals zwischen den Lichtpulsen erhält man dann einen zusätzlichen Gewinn an Empfindlichkeit.

Natürlich sind für bestimmte Anwendungsbereiche auch andere Lichtquellen brauchbar, z.B. Glühlampen oder Gasentladungslampen. Insbesondere wenn hohe Strahlungsdichten in einem begrenzten Spektralbereich erzielt werden sollen, wird man eine Leuchtdiode als Lichtquelle einsetzen. Diese finden auch bevorzugt bei Infrarot-Absorptions- bzw. Reflexionsmessungen Verwendung.

Ordnet man die zu untersuchende Probe im Probenraum eines Scanning-Elektronenmikroskopes an, dann lassen sich neben den für die Analyse des atomaren Aufbaues notwendigen Untersuchungen mit einem hochenergetischen Elektronenstrahl molekulare Eigenschaften durch Analyse mittels Licht verschiedener Wellenlänge und Messung der emittierten Photoelektronen in ihrer räumlichen Verteilung ermitteln. Weiterhin ist es möglich, die Präparation der Probe (Ionenätzung, Aufdampfen) vor der elektronenmikroskopischen Untersuchung mit optischen Verfahren zu kontrollieren. Man beobachtet die Probe z.B. während der Ionenätzung im Lichte ihrer Raman-Strahlung und erfährt auf diese Weise, wann der Ätzprozess abgeschlossen ist.

Anhand der Figuren 1–5 der beigefügten Zeichnungen werden Ausführungsbeispiele der Erfindung näher erläutert:

Fig. 1 skizziert eine Vorrichtung zur Erzeugung eines Bildes im inelastisch gestreuten Licht unter Verwendung einer Lichtquelle mit vorwählbarer Wellenlänge;

Fig. 2 skizziert eine alternative Vorrichtung mit Wellenlängenvorwahl auf der Beobachtungsseite;

Fig. 3 skizziert ein drittes Ausführungsbeispiel, das die Erfassung dynamischer Vorgänge erlaubt;

Fig. 4 skizziert die Vorrichtung zur Erzeugung eines Bildes der von einer Probe emittierten Photoelektronen;

Fig. 5 zeigt die in den Vorrichtungen gemäss Fig. 1–4 verwendete Optik.

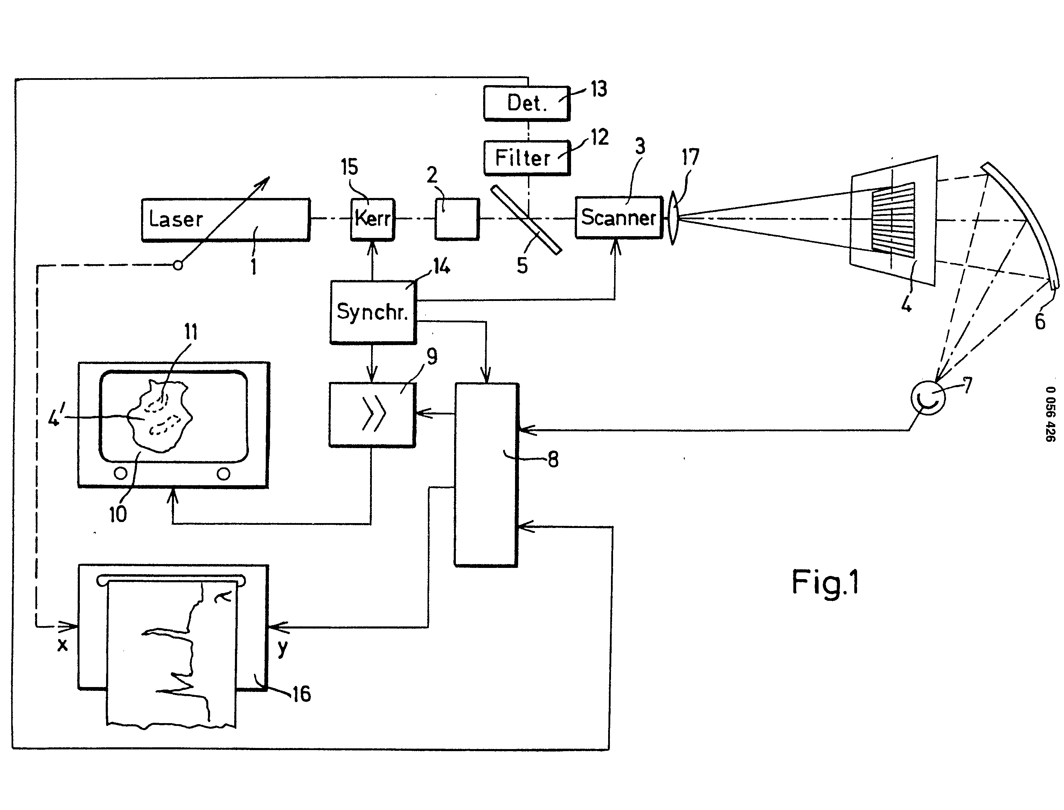

In dem Ausführungsbeispiel nach Fig. 1 erzeugt ein Laser 1 ein Lichtbündel, dessen Polarisationsrichtung in einem Polarisationsdreher 2 einstellbar ist. Durch eine Abtasteinheit 3 wird das fokussierte Lichtbündel nach Passieren des Teilerspiegels 5 rasterförmig über die transparente Probe 4 bewegt.

Die transmittierte Strahlung wird über einen hinter der Probe 4 angeordneten Spiegel 6 auf einen Detektor 7 reflektiert. Dessen Ausgangssignal kann über ein Schaltelement 8 einem mit der Abtastfrequenz über eine Einheit 14 synchronisierten Videoverstärker 9 zugeführt werden, dessen Ausgangssignale zur Darstellung der Probe 4' auf dem Schirm des Monitors 10 benutzt werden.

Ein im Strahlengang zwischen Laser 1 und Abtasteinheit 3 angeordneter elektrooptischer Verschluss, z.B. eine Kerrzelle 15 dient zur Dunkelsteuerung des Lichtbündels während der Dauer des Rücklaufs.

Gleichzeitig mit dem Nachweis der transmittierten Strahlung im Detektor 7 wird die von der Probe ausgehende Raman- oder Fluoreszenz-Strahlung über das Objektiv 17 und die Abtasteinheit 3 nach Ausspiegelung durch den Teilerspiegel 5 und Filterung im Monochromator 12 auf einen sehr viel empfindlicheren Detektor 13 fokussiert, der z.B. aus einem Photomultiplier bestehen kann.

Bei geeigneter Wahl der Transmissions-Charakteristik des Filters 12 zwischen Probe 4 und Photomultiplier 13 in Bezug auf die Wellenlänge des Lasers 1 gelangt für die Einschlüsse 11 in der Probe 4 charakteristische Strahlung wie z.B. Raman- oder Fluoreszenz-Strahlung auf den Photomultiplier 13, dessen Ausgangssignal über das Schaltelement 8 und den Videoverstärker 9 zur Bilddarstellung der Einschlüsse 11 auf dem Monitor 10 dient.

Das Schaltelement 8 zerhackt die Signale des Photomultipliers 13, so dass sich die Einschlüsse 11 durch Blinken im Bild 4' der Probe 4 auf dem Monitor 10 bemerkbar machen. Die Einheit 14 steuert die Abtasteinheit 3, die Kerrzelle 15 sowie das Schaltelement 8 synchron mit der Videofrequenz. Mit ihr lässt sich die Abtasteinheit 3 stoppen, so dass das Laser-Lichtbündel auf vorbestimmte Probenbereiche fokussiert ist, während die Kerrzelle 15 hell gesteuert ist und das Schaltelement 8 den Ausgang des Photomultipliers 13 an den Eingang des Schreibers 16 gelegt hat.

Der X-Vorschub des Schreibers 16 ist mit der Wellenlänge des Lasers 1 gekoppelt, so dass sich durch Variation der Wellenlänge die Raman-Spektren der Einschlüsse 11 in der Probe 4 aufnehmen lassen.

Fluoreszenz und/oder Raman-Spektren aus einzelnen Probenbereichen erhält man natürlich auch dann, wenn ein kontinuierlich durchstimmbarer Monochromator 12 verwendet wird und somit die Wellenlängen-Selektion auf der Beobachtungs- statt auf der Anregungsseite vorgenommen wird.

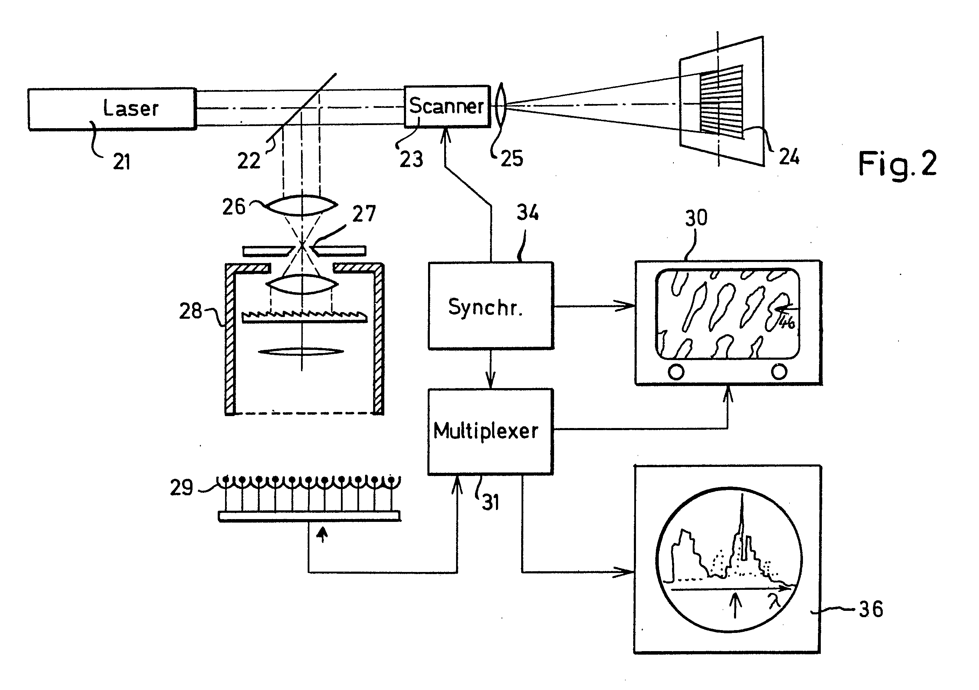

Die in Fig. 2 skizzierte Vorrichtung besteht aus einem Laser 21, in dessen Strahlengang ein halbdurchlässiger Spiegel 22 angeordnet ist. Die von einer Einheit 34 gesteuerte Abtasteinheit 23 bewegt das durch das Objektiv 25 fokussierte Laserstrahlbündel über die Probe 24. Von der Probe 24 ausgehende Strahlung wird vom Objektiv 25 gesammelt und nach Ablenkung in der Ablenkeinheit 23 und Reflexion am Spiegel 22 von einer Optik 26 auf den Eintrittsspalt 27 eines Monochromators 28 fokussiert. Die dort spektral zerlegten Komponenten der Strahlung gelangen jeweils auf die hinter mehreren Austrittsöffnungen des Monochromators 28 angeordneten Detektoren 29, deren Ausgangssignale zur Darstellung des Spektrums der Probe 24 auf einem Speicheroszillographen 36 dienen.

Die Steuereinheit 31 enthält den mit der Abtastfrequenz synchronisierten Multiplexer für das Auslesen der Detektorzeile 29 sowie Steuerelektronik, über die einzelne Detektoren angewählt werden, deren Signale dann dem ebenfalls mit der Abtastfrequenz synchronisierten Monitor 30 zugeführt werden. Der Monitor 30 zeigt Bilder der Probe 24 im Lichte eines über den Detektor angewählten charakteristischen Spektralbereichs.

In dem ebenfalls mit der Abtasteinheit 23 synchronisierten Speicheroszillographen 36 werden wahlweise jeweils die Spektren ausgewählter Bildpunkte in jeder Bildfolge akkumuliert und so im Signal-Rauschverhältnis verbessert, oder es wird das über alle Bildpunkte integrierte Gesamtspektrum der Probe 24 dargestellt. Anhand des Gesamtspektrums der Probenoberfläche lassen sich die für die Verunreinigungen charakteristischen Banden auswählen, so dass auf dem Monitor 30 nur die bei normaler Beobachtung unsichtbaren fluoreszierenden oder Raman-aktiven Verunreinigungen 46 erkennbar sind.

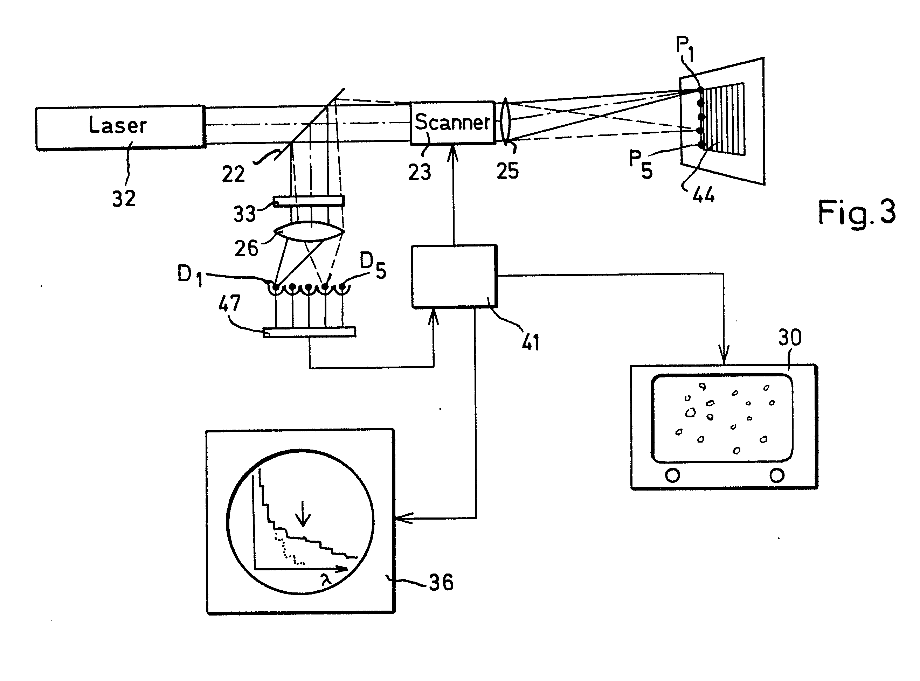

Mit der in Fig. 3 skizzierten Anordnung lassen sich fluoreszierende Verunreinigungen auch auf einer fluoreszierenden Probe erkennen, wenn nur die Fluoreszenz-Abklingzeit beider Komponenten unterschiedlich ist.

Der Aufbau der Anordnung entspricht im wesentlichen der in Fig. 2 skizzierten; statt auf den Eintrittsspalt 27 des Monochromators 28 werden hier jedoch die beleuchteten Punkte der Probe 44 auf ein lineares Detektor-Diodenarray abgebildet. Das im Abbildungsstrahlengang hinter dem Spiegel 22 angeordnete Filter 33 hält die Strahlung der Lichtquelle 21 zurück und lässt nur die Fluoreszenz-Strahlung der Probe 44 auf das Detektor-Diodenarray 47 fallen.

Dieses ist so angeordnet, dass bei konstanter Stellung des im ablenkenden Scanner 23 befindlichen Spiegels der gerade beleuchtete Probenpunkt P 1 auf die erste Diode des Arrays abgebildet und zeitlich gesehen nach diesem Punkt P 1 beleuchtete Punkte P 2 bis P 5 auf die jeweils anschliessenden Dioden D 2 bis D 5 abgebildet werden. Das zeitliche Verhalten der Intensität I (t) der Fluoreszenz-Strahlung z.B. eines Probenpunktes P lässt sich dann aus den im Takte der Abtastfrequenz ausgelesenen Signalen $S_i$ der Dioden $D_i$ ermitteln, deren Index i abhängig von der Abtastgeschwindigkeit V und dem Abstand S zweier benachbarter Probenpunkte P jeweils um eine Zahl von Schritten weitergezählt ist, die sich als ganzzahliger Teil des Quotienten $\frac{V \cdot t}{S}$ ergibt.

Eine im Takte der Abtasteinheit 23 arbeitende Ausleseelektronik 41 bereitet die Signale der Diodenzeile 47 als zeitabhängige Signale vorwählbarer Probenpunkte auf und führt sie einem Oszillographen 36 zur Darstellung der Abklingkurve zu. Die mit grösserer Zeitkonstante als die Probenoberfläche fluoreszierenden Verunreinigungen lassen sich auf dem Monitor 30 separat darstellen, indem mit der Anwahl bestimmter Diodengruppen des Arrays 47 durch die Auswerteelektronik 41 die Verzögerungszeit zwischen der Beleuchtung des Probenpunktes und dem Nachweis der Fluoreszenz-Strahlung eingestellt wird. Auf die gleiche Weise kann die Fluoreszenz-Strahlung gegen Raman-Strahlung diskriminiert werden.

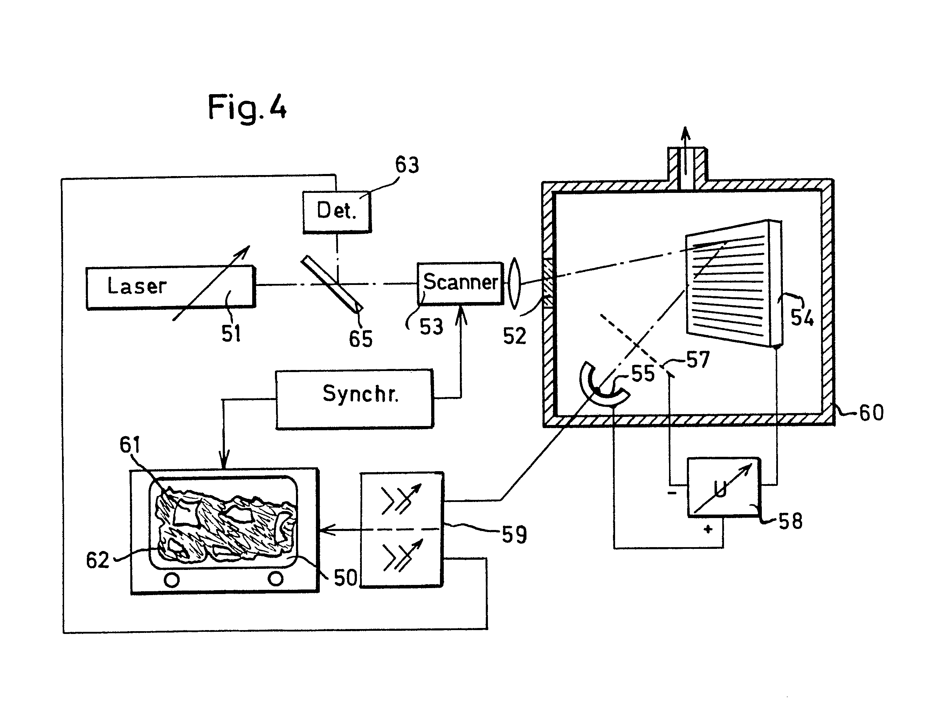

Fig. 4 skizziert eine Vorrichtung zur Darstellung einer Probe 54 im «Lichte» ihrer emittierten Photoelektronen. Die Probe 54 befindet sich in einem evakuierten Gehäuse 60, vor einem Fenster 52, durch das sie von einem Laser 51 mit Licht bestrahlt wird. Die Abtasteinheit 53 führt das Laserlichtbündel über die Probenoberfläche. Im Gehäuse 60 ist ein Detektor 55 für die von der Probe emittierten Photoelektronen angeordnet. Ein Netzgerät 58 hält diesen auf positivem Potential gegen die Probe 54 und versorgt ein zwischen dem Detektor 55 und der Probe 54 angeordnetes Gitter 57 mit negativer Vorspannung gegenüber der Probe 54. Die Signale des Detektors 55 liefern nach Verstärkung im Zweikanalverstärker 59 auf einem mit dem Abtaster 53 synchronisierten Monitor 50 ein Bild der elektronenemittierenden Probenbereiche 61.

Diese sind von einem Auflicht-Hellfeldbild 62 der Probe 54 überlagert, welches dadurch entsteht, dass das von der Probe 54 zurückgestreute Licht über den Teilerspiegel 65 auf den Detektor 63 reflektiert wird, dessen Ausgang mit dem zweiten Eingang des Zweikanalverstärkers 59 verbunden ist.

Durch Variation der Anregungswellenlänge kann der Kontrast des durch die Photoelektronen erzeugten Bildes substanzspezifisch eingestellt werden, so dass sich z.B. nur alle leicht ionisierbaren Teile der Probenoberfläche mit einer Bindungsenergie der Elektronen unter dem der Anregungswellenlänge entsprechenden Grenzwert hell abzeichnen.

Eine weitere Kontrastierungshilfe ergibt sich dann durch das Gitter 57, mit dem alle Elektronen, deren kinetische Energie unter einem durch die Vorspannung des Gitters 57 definierten Wert liegt, vom Nachweis durch den Detektor 55 ausgeschlossen werden. Durch geeignete Wahl der Wellenlänge des anregenden Lichtes und der Vorspannung des Gitters 57 können also Elektronen aus einem schmalen Energiefenster, das für die sichtbar zu machende Komponente der Probe 54 charakteristisch ist, zur Bilderzeugung ausgewählt werden.

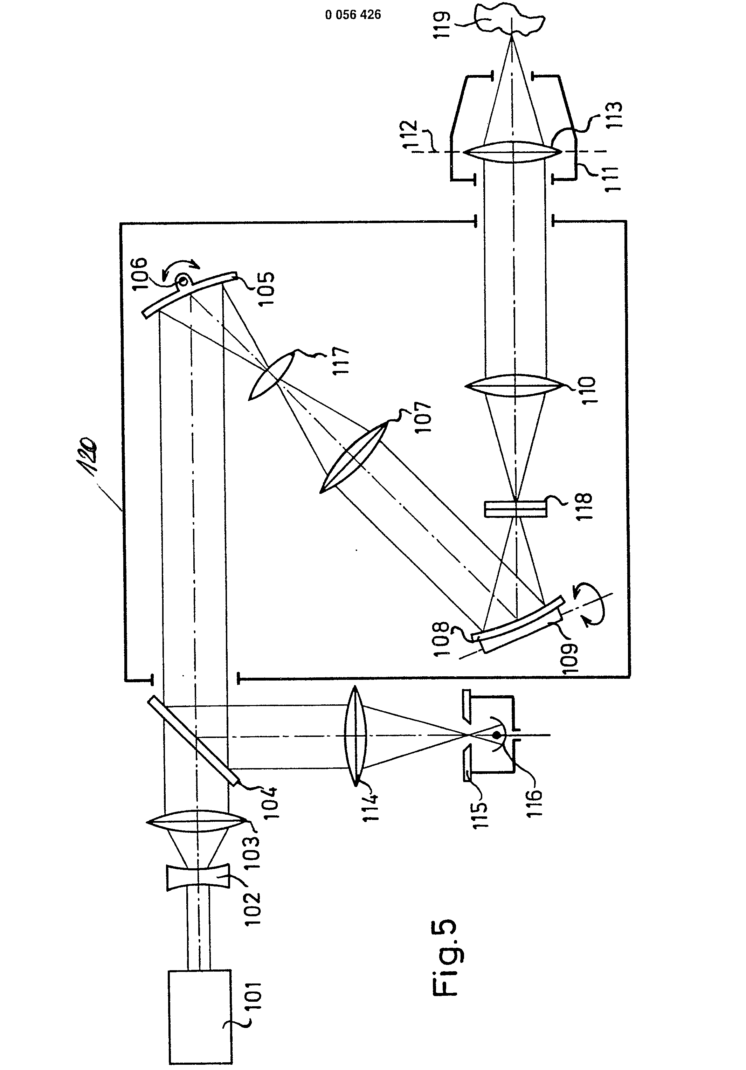

Fig. 5 zeigt etwas detaillierter den Aufbau der Optik der in den Fig. 1–4 skizzierten Vorrichtungen:

Ein Laser 101, dessen monochromatisches, paralleles Strahlenbündel von einer Aufweitungsoptik 102, 103 an den Durchmesser des Objektivs 111 angepasst wird, dient als Lichtquelle. Das aufgeweitete Laserlichtbündel tritt nach Passieren eines halbdurchlässigen Spiegels 104 in eine Abtasteinheit 120 ein, die zwei mit ihren Drehachsen 106 bzw. 109 senkrecht zueinander angeordnete Schwingspiegel 105 und 108 zur zeilenweisen Abtastung des Objektes 119 besitzt. Durch die konkaven Spiegel 105 und 108 wird das parallel einfallende Beleuchtungsstrahlenbündel jeweils auf die Hauptebenen der Zylinderlinsen 117 und 118 fokussiert, deren Brechkraft abhängig vom Zeitwinkelverhalten der Spiegel so gewählt ist, dass in der Ebene des Objektes 119 eine zeitlineare Abtastung stattfindet.

Die Linsen 107 und 110, die die gleiche Brennweite wie die Spiegel 105 und 108 besitzen, sind zwischen den beiden Spiegeln bzw. zwischen dem Spiegel 108 und dem Objektiv 111 in einem Abstand von den Spiegeln bzw. der bildseitigen Hauptebene 112 der Objektivlinse 113 angeordnet, der ihrer doppelten Brennweite entspricht. Durch die Linsen 107 und 110 finden daher eine Abbildung der Spiegel 105 und 109 aufeinander bzw. in die bildseitige Hauptebene 112 des Objektives 111 im Massstab −1 statt. Das Objektiv 111 fokussiert das Beleuchtungsstrahlenbündel in die Ebene der Probenoberfläche 119.

Die konkave Ausbildung der Spiegel ist selbstverständlich nur eine, wenn auch vorteilhafte Ausführungsform. Es können auch Planspiegel zum Abtasten verwendet werden, wenn zusätzliche brechende Komponenten in den Strahlengang eingeführt werden, die die fokussierende Wirkung der Spiegel übernehmen.

Wegen der afokalen Strahlenführung im Bereich der Abtasteinrichtung 120 wird deren Aufbau nicht durch vorgegebene Tubuslängen beschränkt, sondern kann in Verbindung mit Objektiven, die auf unendliche Ausgangsschnittweite korrigiert sind, in weiten Grenzen angepasst werden. Natürlich ist es auch ohne Weiteres möglich, die Brechkräfte und Abstände der Linsen in der Abtasteinheit 120 so zu wählen, dass anstatt des hier gezeigten afokalen Strahlenverlaufes ein auf Objektive mit endlicher Ausgangsschnittweite abgestimmter Strahlengang resultiert.

Ist eine Unterdrückung der Wellenlängen des Anregungslichtes nötig, so werden entsprechende Filter in den Strahlengang zwischen dem Spiegel 104 und dem Detektor 116 eingefügt (vgl. Filter 33 in Fig. 3) und/oder es wird ein dichroitischer Teilerspiegel verwendet. Monochromatoren können hinter der Blende 115 angeordnet werden.

Durch die beschriebene Anordnung der Komponenten der Abtasteinrichtung 120 ist gewährleistet, dass die Achse des Abtaststrahlenbündels stets durch den bildseitigen Hauptpunkt des abbildenden Objektivs 111 tritt, dessen Apertur somit unter allen Ablenkwinkeln im wesentlichen voll ausgefüllt wird. Die Abtastung erfolgt somit beugungsbegrenzt, wodurch ein Höchstmass an Auflösung erreicht wird. Dabei besitzt die Abtasteinrichtung einen vergleichsweise einfachen Aufbau, der die Integration handelsüblicher Baugruppen (Objektive, Galvano-Scanner) unter Vermeidung von komplizierten Sonderanfertigungen erlaubt.

**Patentansprüche**

1. Vorrichtung zur Darstellung ausgewählter Eigenschaften einer Probe in Abhängigkeit vom Ort in der Probe, mit
 − einer Lichtquelle (1; 21; 32; 51; 101),
 − einer Strahlablenkeinrichtung (3; 23; 53; 120) zur rasterförmigen Abtastung mikroskopischer Bereiche der Probe mit einem Abtastlichtstrahl der Lichtquelle, welche Einrichtung die Position des Lichtstrahls auf der Probe bestimmende strahlablenkende Elemente (105, 108) aufweist,
 − mehreren ortsfesten, auf unterschiedliche Spektralbereiche ansprechenden Strahlungsempfängern (7, 13; 29; 47; 55; 63; 116) zur Detektion von der Probe ausgehender Strahlung, wobei der Spektralbereich wenigstens eines Strahlungsempfängers so gewählt ist, dass er ausserhalb des Spektrums des Abtastlichtstrahls liegt,
 − Mitteln zur Fokussierung der von der Probe (4; 24; 44; 54; 119) ausgehenden Strahlung auf die Strahlungsempfänger, welche Mittel ein Objektiv (17; 25; 11) umfassen,
 − einer synchron mit der Abtastung der Probe gesteuerten Einrichtung (10; 30; 50) zur bildlichen Darstellung der Ausgangssignale der Strahlungsempfänger,
dadurch gekennzeichnet, dass
 − das Objektiv (17; 25; 111) zwischen der Strahlablenkeinrichtung (3; 23; 53; 120) und der Probe (4; 24; 44; 54; 119) derart angeordnet ist, dass der Abtastlichtstrahl durch das Objektiv auf die Probe fokussiert wird und von der Probe ausgehende Strahlung über das Objektiv und die Strahlablenkeinrichtung wenigstens einem der Strahlungsempfänger zugeführt ist,
 − die strahlablenkenden Elemente (105, 108) in zur bildseitigen Hauptebene (112) des Objektivs (17; 25; 111) konjugierten Ebenen angeordnet sind.

2. Vorrichtung nach Anspruch 1, dadurch gekennzeichnet, dass vor dem über das Objektiv (111) beaufschlagten Strahlungsempfänger (116) eine feststehende Blende (115) sowie ein durchstimmbarer Monochromator angeordnet sind.

3. Vorrichtung nach Anspruch 1, dadurch gekennzeichnet, dass mehrere Strahlungsempfänger (29) über das Objektiv (25) und über eine feststehende Blende (27) sowie einen Monochromator (28) mit jeweils unterschiedlichen Spektralanteilen der von der Probe ausgehenden Strahlung beaufschlagt sind.

4. Vorrichtung nach Anspruch 1, dadurch gekennzeichnet, dass vor dem über das Objektiv beaufschlagten Strahlungsempfänger eine senkrecht zur optischen Achse verschiebbare Blende angeordnet ist.

5. Vorrichtung nach Anspruch 1, dadurch gekennzeichnet, dass vor dem über das Objektiv beaufschlagten Strahlungsempfänger eine Blende variabler Abmessung angeordnet ist.

6. Vorrichtung nach Anspruch 1, dadurch gekennzeichnet, dass zumindest ein Teil der Strahlungsempfänger von einem sich in Abtastrichtung erstreckenden linearen Diodenarray (47) gebildet ist.

7. Vorrichtung nach einem der vorhergehenden Ansprüche, dadurch gekennzeichnet, dass der auf einen Spektralbereich ausserhalb des Spektrums des Abtastlichtstrahls ansprechende Strahlungsempfänger vor oder hinter der Probe und ausserhalb des über das Objektiv führenden Strahlengangs angeordnet ist.

8. Vorrichtung nach einem der vorhergehenden Ansprüche, dadurch gekennzeichnet, dass die Einrichtung zur bildlichen Darstellung zur getrennten oder überlagerten Darstellung der Ausgangssignale der Strahlungsempfänger ausgebildet ist.

9. Vorrichtung nach einem der vorhergehenden Ansprüche, dadurch gekennzeichnet, dass Einrichtungen zur Beaufschlagung der Probe mit Ultraschall vorgesehen sind.

10. Vorrichtung nach Anspruch 7, dadurch gekennzeichnet, dass der vor der Probe angeordnete Strahlungsempfänger ein Elektronendetektor (55) ist.

11. Vorrichtung nach einem der vorhergehenden Ansprüche, dadurch gekennzeichnet, dass der Bildpunktabstand des Rasters geringer ist als der Durchmesser des beugungsbegrenzten Fokus des Abtastlichtstrahls und dass ein elektronischer Rechner zur Entfaltung der bildpunktabhängigen Verteilung der Signalintensität anhand der bekannten, im wesentlichen gaussförmigen Intensitätsverteilung des Lichts im Fokus vorgesehen ist.

12. Vorrichtung nach Anspruch 7, dadurch gekennzeichnet, dass der vor oder hinter der Probe angeordnete Empfänger auf die von der Probe ausgehende, thermische Strahlung sensibilisiert ist.

13. Vorrichtung nach Anspruch 7, dadurch gekennzeichnet, dass der vor oder hinter der Probe angeordnete Empfänger ein akustischer Detektor ist.

**Claims**

1. Apparatus for displaying selected parameters of a specimen dependent on their location within the specimen, comprising
   – a light source (1; 21; 32; 51; 101);
   – a beam scanning unit (3; 23; 53; 120) for scanning microscopic areas of the specimen with a beam of said light source, which unit comprises beam deflecting elements (105, 108);
   – several fixly mounted radiation detectors (7, 13; 29; 47; 55, 63; 116) being sensitive on different spectral regions for detection of radiation emitted by said specimen, the spectral region of at least one radiation detector being selected to be apart from the spectrum of the scanning light beam;
   – means for focussing radiation emitted by said specimen (4; 24; 44; 54; 119) on said radiation detectors, which means comprise an objective (17; 25; 11);
   – a unit for displaying the output signals of said radiation detectors on a screen, said display unit being controlled in synchronism with the scanning of the specimen;
   characterized by the fact that
   – the objective (17; 25; 111) is arranged between said beam scanning unit (3; 23; 53; 120) and said specimen (4; 24; 44; 54; 119) in a manner that the scanning light beam is focussed on the specimen by the objective and radiation emitted by the specimen is guided via said objective and said beam scanning unit to at least one of said detectors;
   – the beam deflecting elements (105; 108) are arranged in planes conjugate to the image-side principal plane (112) of the objective (17; 25; 111).

2. Apparatus according to claim 1, characterized by the fact that a stationary diaphragm (115) as well as a continuously turnable monochromator are arranged in front of the detector (116) sensing radiation that passed the objective (111).

3. Apparatus according to claim 1, characterized by the fact that a plurality of detectors (29) are hit by respectively different spectral parts of radiation passing the objective (25), a stationary diaphragm (27) and a monochromator (28).

4. Apparatus according to claim 1, characterized by the fact that a diaphragm which is displaceable perpendicular to the optical axis is arranged in front of the detector sensing radiation that passed the objective.

5. Apparatus according to claim 1, characterized by the fact that a diaphragm of variable dimension is arranged in front of the detector which senses radiation that passed the objective.

6. Apparatus according to claim 1, characterized by the fact that at least some of the radiation detectors are on a linear diode array (47) extending in the scanning direction.

7. Apparatus according to one of the preceding claims, characterized by the fact that the radiation detector sensitive in a spectral region outside the spectrum of the scanning light beam is arranged in front or behind the specimen and outside the ray path for radiation passing the objective.

8. Apparatus according to one of the preceding claims, characterized by the fact that said display unit is built as to display the output signals of the detectors either individually or superposed.

9. Apparatus according to one of the preceding claims, characterized by the fact that means are provided for irradiating the specimen with ultrasonic.

10. Apparatus according to claim 7, characterized by the fact that an electron detector is arranged in front of said specimen.

11. Apparatus according to one of the preceding claims, characterized by the fact that the image-point spacing of the scanning raster is smaller than the diameter of the refraction limited focus of the scanning light beam, and that an electric computer is used to correct the image-point-dependent distribution of signal intensity according to the known substantially gaussian intensity distribution in the focus of the scanning light.

12. Apparatus according to claim 7, characterized by the fact that the detector arranged in front or behind the specimen is sensitive on thermal radiation emitted by the specimen.

13. Apparatus according to claim 7, characterized by the fact that the detector arranged in front or behind the specimen is on acoustic detector.

## Revendications

1. Dispositif pour représenter des propriétés sélectionnées d'un échantillon en fonction de l'endroit dans l'échantillon, comprenant
   - une source lumineuse (1; 21; 32; 51; 101),
   - un dispositif de déviation du faisceau (3, 23; 53; 120) pour l'exploration suivant une trame de régions microscopiques de l'échantillon par un faisceau lumineux de balayage de la source de lumière, dispositif qui présente des éléments de déviation de faisceau (105, 108) fixant la position du faisceau lumineux sur l'échantillon,
   - plusieurs récepteurs de rayonnement fixes (7; 13; 29; 47; 55; 63; 116), sensibles à différentes zones spectrales pour la détection de rayonnement issu de l'échantillon, la zone spectrale d'au moins un récepteur de rayonnement étant choisie de manière qu'elle se trouve en dehors du spectre du faisceau lumineux de balayage,
   - des moyens pour focaliser le rayonnement issu de l'échantillon sur les récepteurs de rayonnement, moyens qui comprennent un objectif (17; 25; 11), et
   - un dispositif (10; 30; 50), commandé en synchronisme avec l'exploration de l'échantillon, pour représenter les signaux de sortie des récepteurs de rayonnement sous forme d'une image, caractérisé en ce que
   - l'objectif (17; 25; 111) est placé entre le dispositif de déviation de faisceau (3; 23; 53; 120) et l'échantillon (4; 24; 44; 54; 119), de manière que l'objectif focalise le faisceau lumineux sur l'échantillon et que le rayonnement issu de l'échantillon soit amené par l'objectif et le dispositif de déviation de faisceau à au moins l'un des récepteurs de faisceau et
   - les éléments de déviation de faisceau (105, 108) sont placés dans des plans conjugués au plan principal (112) côté image de l'objectif (17; 25; 111).

2. Dispositif selon la revendication 1, caractérisé en ce qu'un diaphragme fixe (115) et un monochromateur à fréquence variable sont placés devant le récepteur de rayonnement alimenté à travers l'objectif (111).

3. Dispositif selon la revendication 1, caractérisé en ce que plusieurs récepteurs de rayonnement (29) sont alimentés à travers l'objectif (25) et à travers un diaphragme fixe (27), ainsi qu'un monochromateur (28), avec des fractions spectrales chaque fois différentes du rayonnement issu de l'échantillon.

4. Dispositif selon la revendication 1, caractérisé en ce qu'un diaphragme déplaçable perpendiculairement à l'axe optique est placé devant le récepteur de rayonnement alimenté à travers l'objectif.

5. Dispositif selon la revendication 1, caractérisé en ce qu'un diaphragme de dimension variable est placé devant le récepteur de rayonnement alimenté à travers l'objectif.

6. Dispositif selon la revendication 1, caractérisé en ce qu'une partie au moins des récepteurs de rayonnement est formée par une disposition linéaire de diodes (47) s'étendant dans la direction d'exploration.

7. Dispositif selon une des revendications précédentes, caractérisé en ce que le récepteur de rayonnement sensible à une zone spectrale en dehors du spectre du faisceau lumineux de balayage est placé devant ou derrière l'échantillon et en dehors de la marche des rayons passant par l'objectif.

8. Dispositif selon une des revendications précédentes, caractérisé en ce que le dispositif de représentation sous forme d'image est conçu pour une représentation séparée ou pour une représentation superposée des signaux de sortie des récepteurs de rayonnement.

9. Dispositif selon une des revendications précédentes, caractérisé en ce que des dispositifs sont prévus pour envoyer des ultrasons à l'échantillon.

10. Dispositif selon la revendication 7, caractérisé en ce que le récepteur de rayonnement placé devant l'échantillon est un détecteur d'électrons (55).

11. Dispositif selon une des revendications précédentes, caractérisé en ce que l'espacement des points d'image de la trame est inférieur au diamètre du foyer, à diffraction limitée, du faisceau lumineux de balayage et qu'un calculateur électronique est prévu pour le développement de la distribution, fonction des points d'image, de l'intensité du signal suivant la distribution d'intensité connue, essentiellement gaussienne, de la lumière au foyer.

12. Dispositif selon la revendication 7, caractérisé en ce que le récepteur placé devant ou derrière l'échantillon est sensibilisé au rayonnement thermique issu de l'échantillon.

13. Dispositif selon la revendication 7, caractérisé en ce que le récepteur placé devant ou derrière l'échantillon est un détecteur acoustique.

Fig.1

Fig. 2

0 056 426

Fig. 3

# Fig. 4

0 056 426

Fig.5